# EUROPEAN PATENT APPLICATION

(11) **EP 3 002 822 A1**
(43) Date of publication of application: **06.04.2016**
(21) Application number: 15188112.5
(22) Date of filing: 02.10.2015
(51) Int. Cl.: H01Q 1/24, H01Q 21/00

(54) **MODULAR ACTIVE ANTENNA STRUCTURES AND ARRANGEMENTS**

(30) Priority: 03.10.2014 US 201414506023
(71) Applicant: Nokia Solutions and Networks Oy, 02610 Espoo (FI)
(72) Inventor: Junttila, Mikko Juhani, 90310 OULU (FI); Pari, Mika Petri, 91910 TUPOS (FI)
(74) Representative: Borgström, Markus

(57) **Abstract**

Various communication systems may benefit from modularity. For example, wireless communication systems may benefit from a modular active antenna arrangement. A system can include a radio module. The system can also include a plurality of antenna radiator elements. The plurality of antenna radiator elements can be integrated with the radio module. The system can be configured to provide a modular assembly.

## Description

### BACKGROUND:

### Field:

Various communication systems may benefit from modularity. For example, wireless communication systems may benefit from a modular active antenna arrangement.

### Description of the Related Art:

As demand for higher data rates to end users increases, system capacity may need to be improved. Until now, this capacity need has been fulfilled by an increasing number of base stations. Thus, there has been a need for high-power base station system variants and need for smaller base station systems, for example pico base station systems.

Thus, there may need to be different systems for different radio access network providers. Moreover, these systems may need to be customizable. Customization in a conventional system may mean that the system's radio frequency (RF) performance is not always optimized due to losses in the RF- chain, such as, for example RF-cables, impedance mismatch losses, and the like.

Generally, base transceiver station (BTS) antennas are mechanically quite similar. The parts include antenna sheet metal body part, radome, cables, connector, brackets, and radiator elements. The radome can refer to a plastic part that covers the antenna radiator. The bracket can refer to an antenna mechanical part that attaches the antenna to, for example, a pole or wall. The term radio module can refer to the base station mechanical radio part.

In general, antenna structure is not very modular. Thus, almost every time manufacturers have to design new antennas on a case by case basis, depending on radio access network provider demands. This need for repetitive re-design can generate more research and development costs.

More specifically, current antenna structure is based on one main part, which is an antenna body part where all other parts are installed. Other parts can include printed circuit boards, RF cable, antenna radiators, radome, and antenna brackets. This conventional structure means that there are a lot of connections between different parts. Those connections are conventionally made by screws or soldering.

### SUMMARY:

A system, according to certain embodiments, can include a radio module. The system can also include a plurality of antenna radiator elements. The plurality of antenna radiator elements can be integrated with the radio module. The system can be configured to provide a modular assembly.

A system, in certain embodiments, can include a plurality of radio modules. Each radio module of the plurality of radio modules can include a plurality of antenna radiator elements. The plurality of antenna radiator elements can be integrated with the respective radio module.

A system, according to certain embodiments, can include a radio module means. The system can also include a plurality of antenna radiator means. The plurality of antenna radiator means can be integrated with the radio module means. The system can be configured to provide a modular assembly.

A system, in certain embodiments, can include a plurality of radio module means. Each radio module means of the plurality of radio module means can include a plurality of antenna radiator means. The plurality of antenna radiator means can be integrated with the respective radio module means.

### BRIEF DESCRIPTION OF THE DRAWINGS:

For proper understanding of the invention, reference should be made to the accompanying drawings, wherein:
Figure 1 illustrates an antenna and radio module structure according to certain embodiments.
Figure 2 illustrates another antenna and radio module structure according to certain embodiments.
Figure 3 illustrates a further antenna and radio module structure according to certain embodiments.
Figure 4 illustrates a perspective view drawing of a front side of the antenna and radio module structure according to Figure 3.
Figure 5 illustrates an additional antenna and radio module structure according to certain embodiments.
Figure 6 illustrates another antenna and radio module structure according to certain embodiments.
Figure 7A illustrates yet another antenna and radio module structure according to certain embodiments.
Figure 7B illustrates a perspective view drawing of the antenna and radio module structure according to Figure 2.
Figure 8 illustrates an embodiment with a fourteen element array, according to certain embodiments.
Figure 9 illustrates a two element array with two ports, according to certain embodiments.
Figure 10 illustrates perspective views of a radio module according to certain embodiments.
Figure 11 illustrates a radio sub-module in an antenna according to certain embodiments.
Figures 12A and 12B illustrate a filter mechanical analysis according to certain embodiments.
Figure 13 illustrates an exposed view of the module shown in Figures 12A and 12B.
Figure 14 illustrates a cut-away view of the module shown in Figures 12A, 12B, and 13.
Figures 15A, 15B, 15C, 15D, and 15E illustrate various stages of manufacture of an assembly according to certain embodiments.
Figures 16A and 16B illustrate a joint mechanism according to certain embodiments.
Figures 17A, 17B, 17C, and 17D illustrate a plug component according to certain embodiments.
Figure 18 illustrates various arrangements of antenna radiator elements according to certain embodiments.
Figure 19 illustrates a method according to certain embodiments.

### DETAILED DESCRIPTION:

Certain embodiments relate to the construction of active antenna systems with few customized parts, enabling a modular active antenna that can be flexibly configured. For example, certain embodiments relate to an improved Vivaldi antenna pair.

Certain embodiments are directed to the modular structure of active antennas. A core part can be a radio module in which there are integrated antenna radiator elements, which can mean that there is no need for external cabling to RF lines due to the high integration level.

A radio module according to certain embodiments can be installed to an aluminum profile frame, which can include integrated DC feeding lines for power distribution. Data transmission can also be integrated to the same frame part. Aluminum profiles can be bound together with bracket parts. This structure can be very firm mechanically and can be flexible for different configurations. The main parts can be so called "metric parts," which can refer to the fact if different length of antennas are needed, correct length of profile parts, including aluminum profile, extruded radome and back cover, can be cut. After frame assembly, the radio module can be installed to frame in factory or site. Finally, the whole antenna can be covered with radome and back cover.

The structure as described above can be very modular and cost efficient as a way of providing active antenna solutions to radio access network providers. Radio module size may be very suitable for automated production. Furthermore, the same part could be even used also to make a small cell radio product, such as so called pico cells.

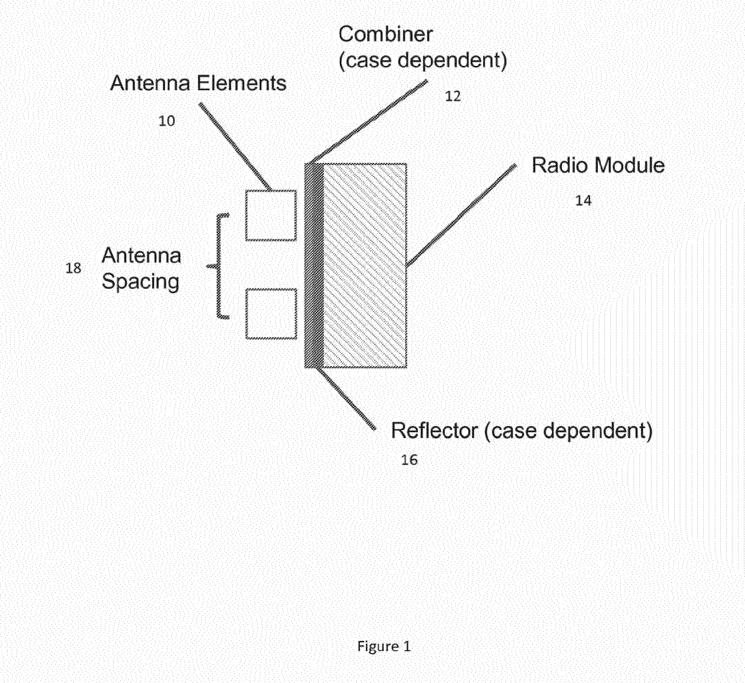

Figure 1 illustrates an antenna and radio module structure according to certain embodiments. As shown in Figure 1, there can be antenna radiator elements 10 separated by antenna spacing 18. The antenna spacing 18 can be the same for all pairs of antennas, or may vary based on antenna design. The antenna radiator elements 10 can be combined and provided in various band specific variants. There can also be a combiner 12, a reflector 16 for improving antenna directivity and a radio module 14. The radio module 14 can include a filter, power amplifier (PA), low-noise amplifier (LNA), digital front end (DFE), and transceiver TRX. The filter and PA can have various band specific variants. The LNA may need band specific tuning. The DFE and TRX can be common parts for all active antenna system (AAS) configurations.

Combiner and radio module maximum length may be equal to twice the antenna spacing 18. Otherwise, in certain embodiments RF-cables, between radio module and antennas, and mechanics customization may be needed in some cases. No RF-cables and connectors may necessarily be needed, and in certain embodiments RF-cables and connectors can be omitted.

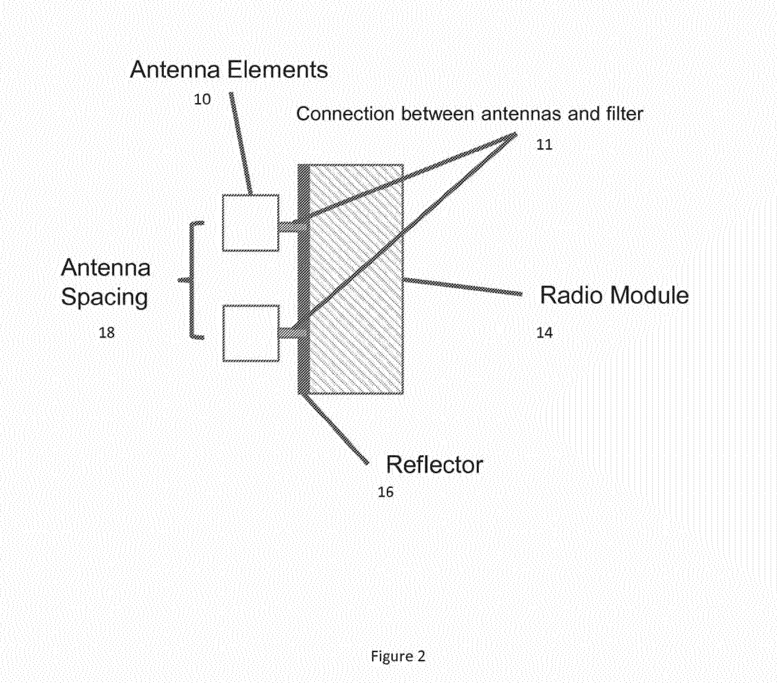

Figure 2 illustrates another antenna and radio module structure according to certain embodiments. As shown in Figure 2, there can be antenna radiator elements 10 separated by antenna spacing 18. The antenna radiator elements 10 can be combined and provided in various band specific variants. The antenna radiator elements 10 can be connected through a reflector 16 to a radio module 14, using a connection 11 between antennas and filter. The connection 11 can be a capacitive coupler, RF connector, metal parts, or the like. The radio module 14 can include a filter, a combiner integrated to the filter, and power amplifier. The filter and power amplifier can be provided in band specific variants. The radio module 14 can also include an LNA, DFE, and TRX as discussed above.

In this embodiment, the combiner can be integrated into the filter. Moreover, in this embodiment, there can be a capacitive coupling between antenna and radio module 14.

The reflector 16 can be variously implemented. For example, the reflector 16 can be implemented as part of a cover of radio module 14 or as an external layer. Other implementations are also possible.

As with the embodiment in Figure 1, in Figure 2 the combiner and radio module maximum length may be equal to twice the antenna spacing. Otherwise, in certain embodiments RF-cables, between radio module and antennas, and mechanics customization may be needed in some cases. However, as with the previously described embodiment, no RF-cables and connectors may necessarily be needed, and in certain embodiments RF-cables and connectors can be omitted.

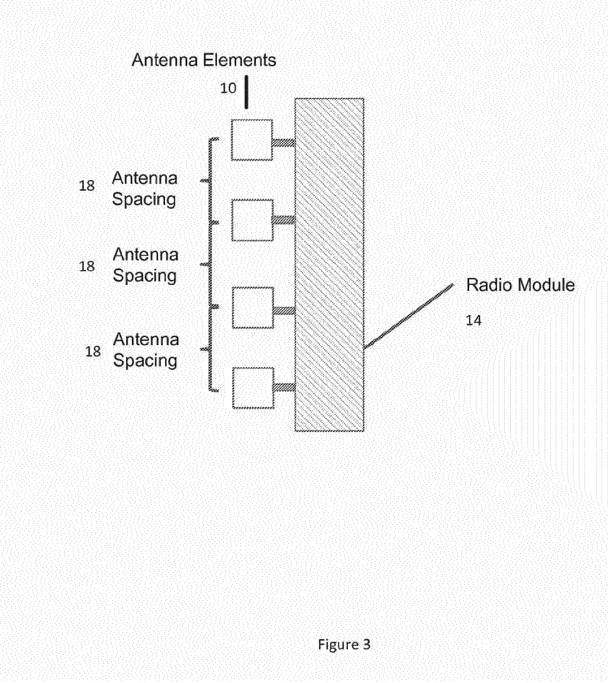

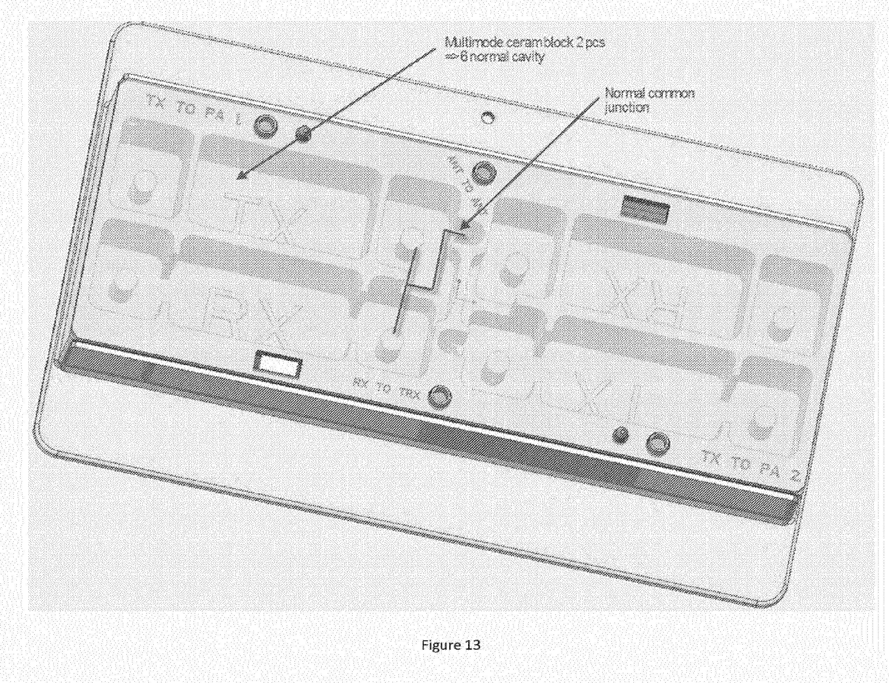

Figure 3 illustrates a further antenna and radio module structure according to certain embodiments. Figure 3 illustrates a four port, four transmitter (TX) and four receiver (RX) version. The embodiment of Figure 3 may be like that of preceding figures, except that there may be additional antenna radiator elements 10. Thus, there can be common mechanics for a doubled radio module (see Figure 13 for an example of a doubled radio module).

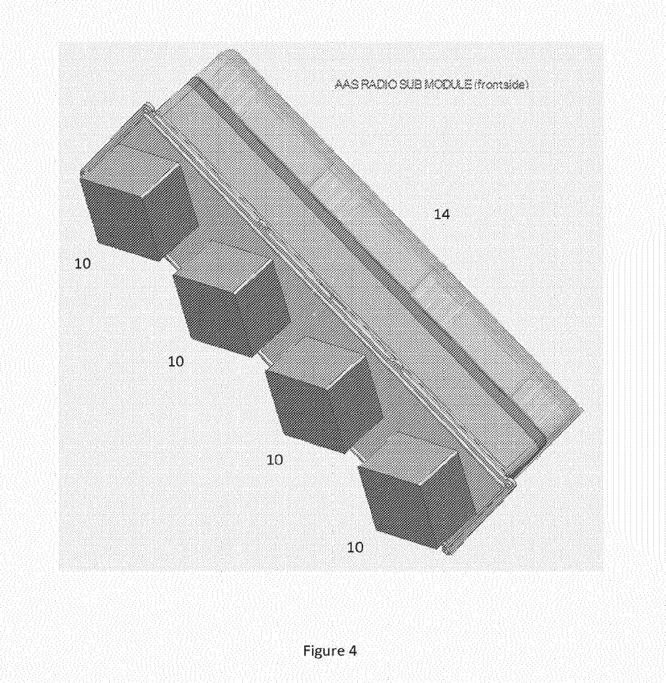

Figure 4 illustrates a perspective view drawing of a front side of the antenna and radio module structure according to Figure 3.

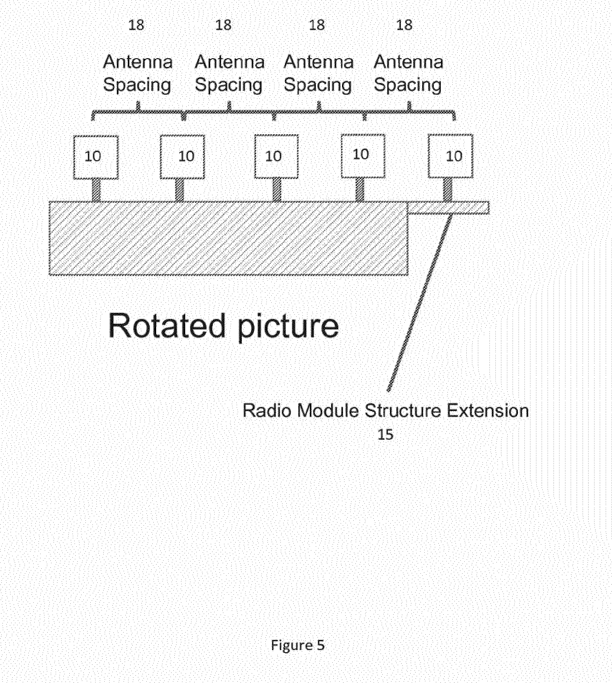

Figure 5 illustrates an additional antenna and radio module structure according to certain embodiments. Figure 5 illustrates a five element structure, in which a radio module structure profile casing has been extended to accommodate the fifth element, using a radio module structure extension 15, as contrasted with a four element structure as shown, for example, in Figures 3 and 4. The picture in Figure 5 is rotated relative to that shown in Figure 3, for ease of viewing.

A five element casing can be done for high gain arrays. Using five element casings in addition to four element casings can permit more flexibility in the number of elements in an array. The following are some examples: 4 element array (4- port, 4 elements); 5 element array (4- port, 5 elements); 8 element array (4- ports x 2, 4 elements x 2); 10 element array (4- ports x 2, 5 elements x 2); 12 element array (4-ports x 3, 4 elements x 3); 14 element array (4- ports x 3, 5 elements x 2 + 4 elements x 1); and the like. There may be no need for additional 2- port radio modules for cost savings. The term antenna ports can refer to such features as antenna interfaces or antenna connection points. These can refer to a part that connects an antenna radiator element to a radio module. The connecting can be done by integration, such as all parts being included in the same device, or, in another option, the radio module and antenna radiator element can be provided as different elements and connected with some connection method, like cable.

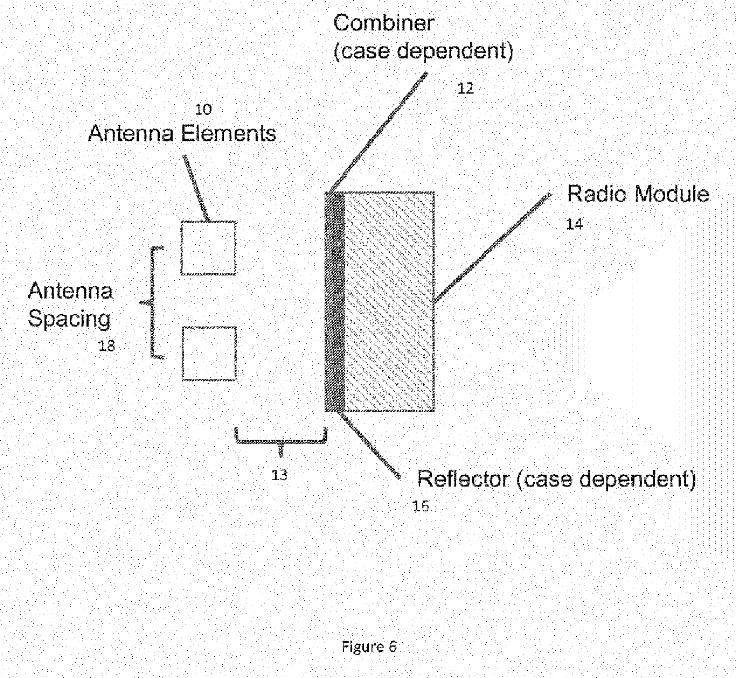

Figure 6 illustrates another antenna and radio module structure according to certain embodiments. As shown in Figure 6, there can be antenna radiator elements 10 separated by antenna spacing 18. The antenna radiator elements 10 can be combined and provided in various band specific variants. There can also be a combiner 12, a reflector 16, a radio module 14.

The antenna radiator elements 10 can be relatively weakly coupled with reflector 16, providing less directivity, particular in view of gap 13. The radio module 14 can include a filter and power amplifier, which can be provided in band specific variants. The radio module can also include an LNA, DFE, and TRX as discussed above.

The embodiment of Figure 6 may be useful for a less directive antenna. For example, an omni-directional antenna may be usefully provided with a structure as shown in Figure 6.

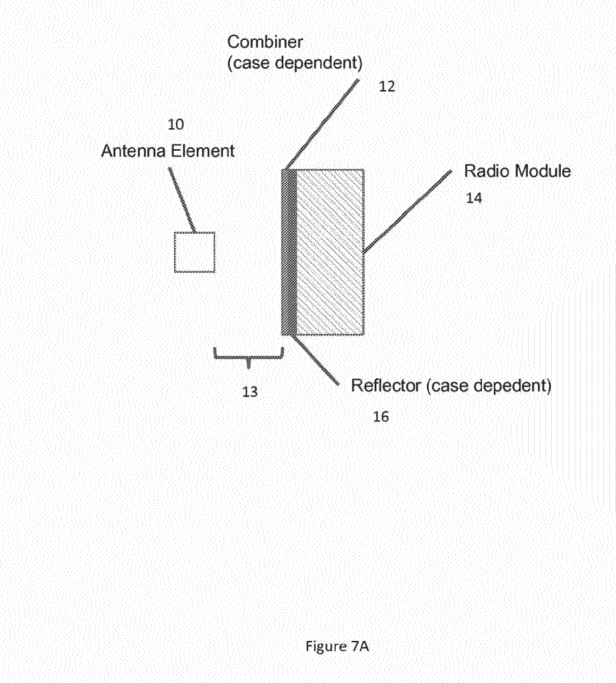

Figure 7A illustrates yet another antenna and radio module structure according to certain embodiments. Figure 7A may provide a similar structure to that of Figure 6, except that Figure 7A illustrates a single antenna radiator element 10, whereas Figure 6 illustrates two antenna radiator elements 10. Consequently there is no antenna spacing shown in Figure 7A.

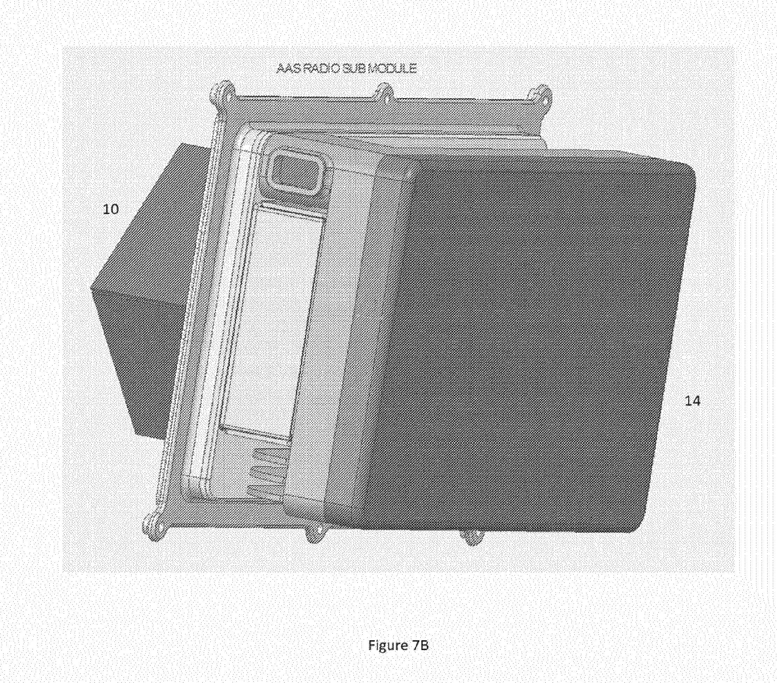

Figure 7B illustrates a perspective view drawing of the antenna and radio module structure according to Figure 2.

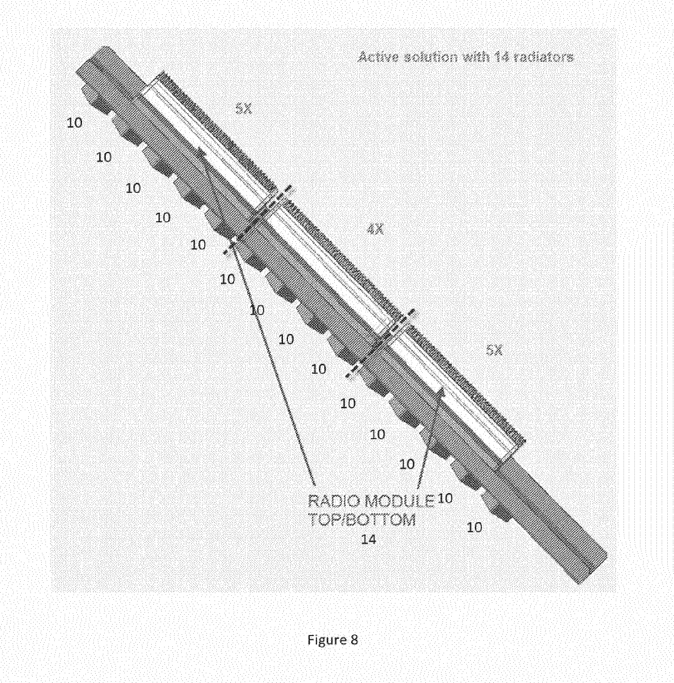

Figure 8 illustrates an embodiment with a fourteen element array, according to certain embodiments. As shown in Figure 8, the fourteen element array can be composed of three four port modules, of which there are two five-element modules and one four element module.

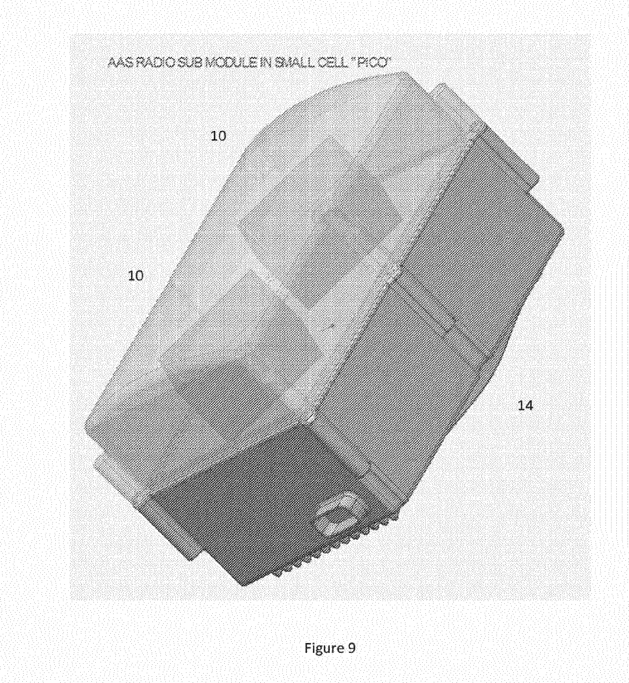

Figure 9 illustrates a two element array with two ports, according to certain embodiments. The illustrated embodiment may be useful as an AAS radio sub-module in a small cell or pico cell. The embodiment may provide two TX and two RX.

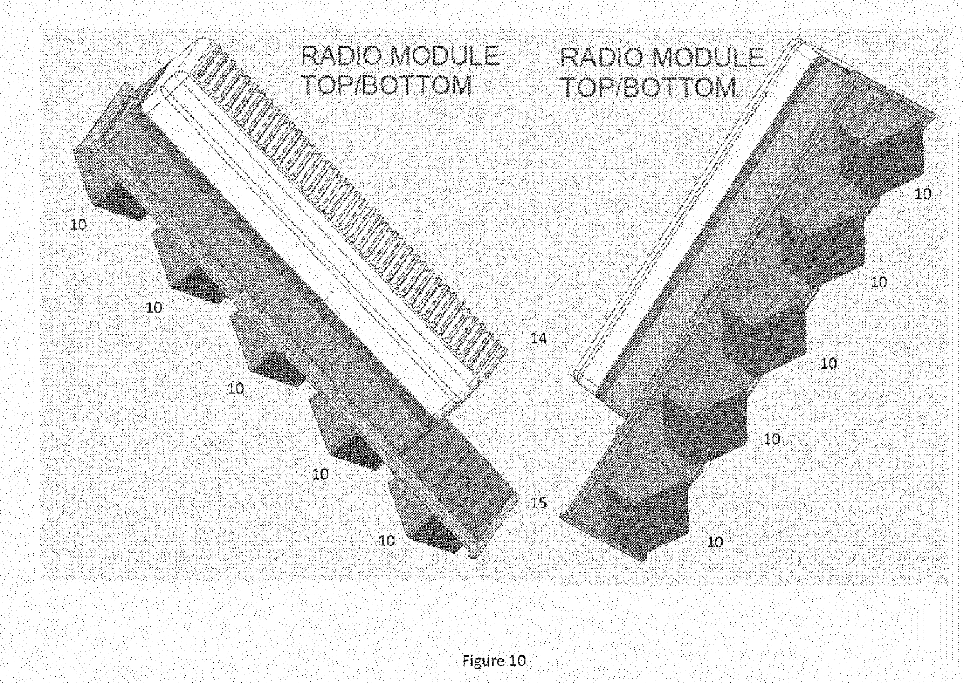

Figure 10 illustrates perspective views of a radio module according to certain embodiments. As shown in Figure 10 on the right side, a view primarily shows the antenna radiator element side. Likewise, on the left side a view primarily shows the port side.

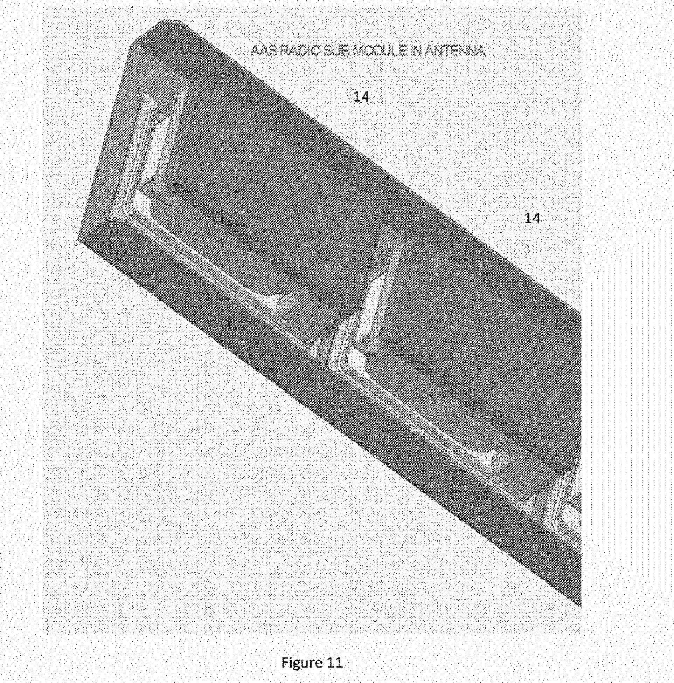

Figure 11 illustrates a radio sub-module in an antenna according to certain embodiments. The AAS radio sub-module can be similar to or the same as that shown in Figure 7B, of which multiple modules can be provided in the antenna, as shown.

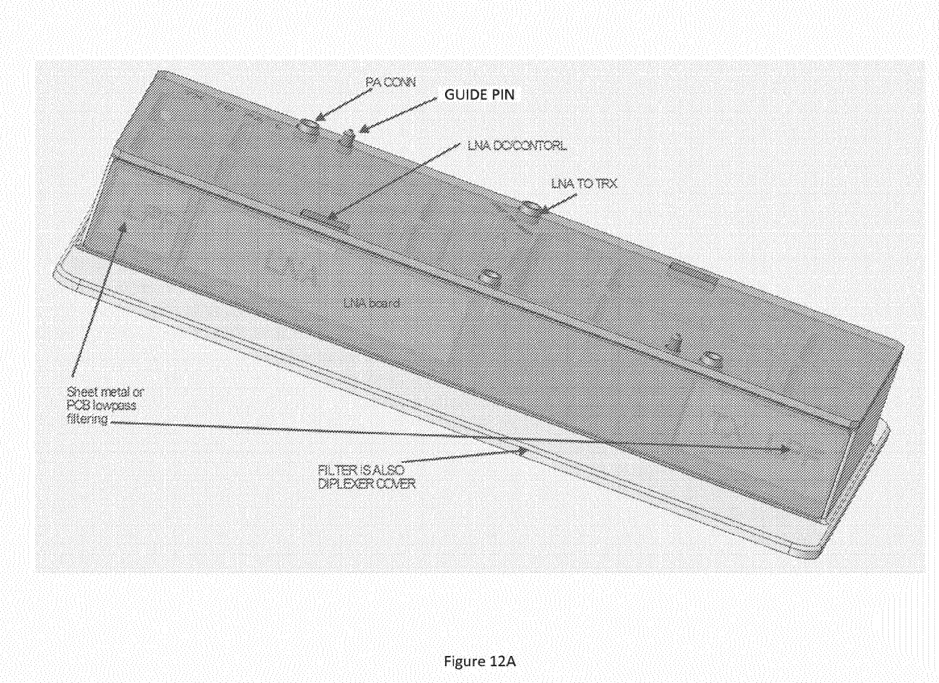

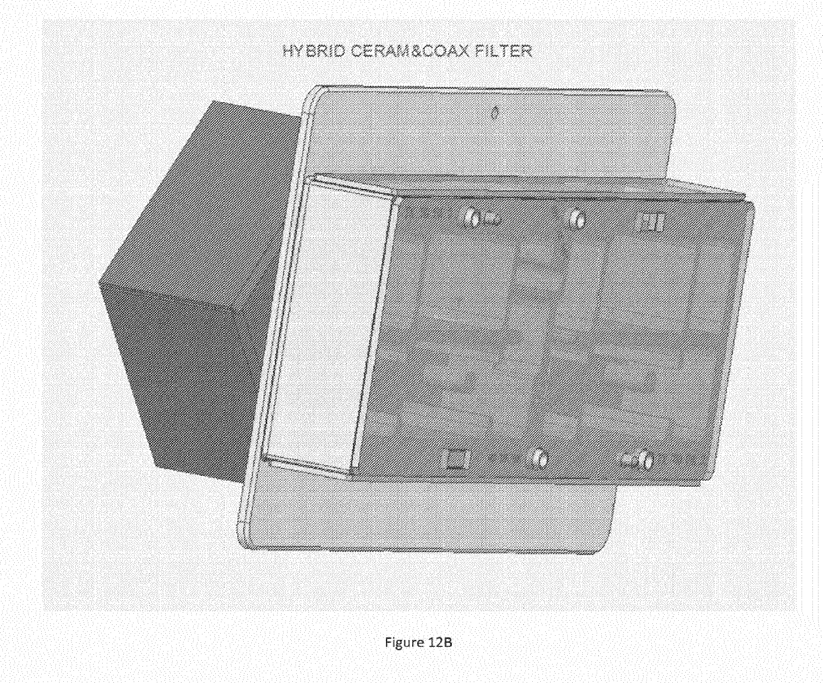

Figures 12A and 12B illustrate a filter mechanical analysis according to certain embodiments. As shown in Figure 12A, the module can include sheet metal or printed circuit board (PCB) low pass filtering (LPF), as well as an LNA board. The filter can also include the diplexer cover. The module can also include a PA connector (PA CONN), guide pin, LNA DC/Control connector, and LNA to TRX connector.

Figure 12B shows a second perspective view of the system shown in Figure 12A. In this second perspective view the port is visible.

Figure 13 illustrates an exposed view of the module shown in Figures 12A and 12B. As shown in Figure 13, each half of the two part module can include a multimode ceramic block having 6 normal cavities with a normal common junction.

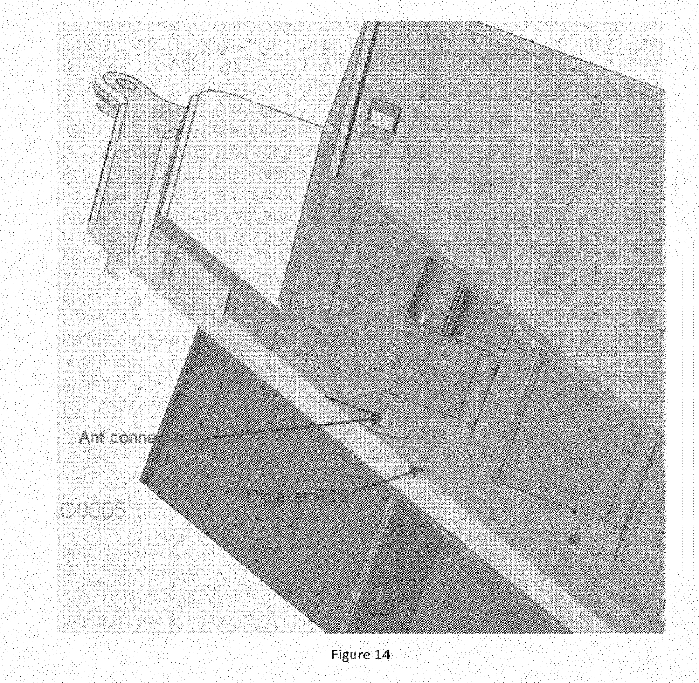

Figure 14 illustrates a cut-away view of the module shown in Figures 12A, 12B, and 13. As shown in Figure 13, an antenna connection can extend from a diplexer PCB into the ceramic block.

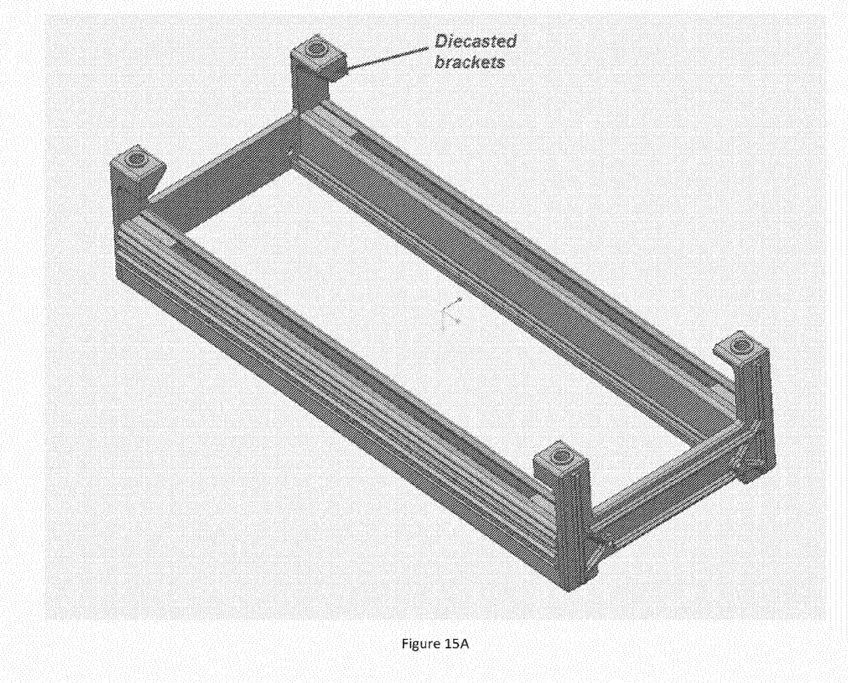

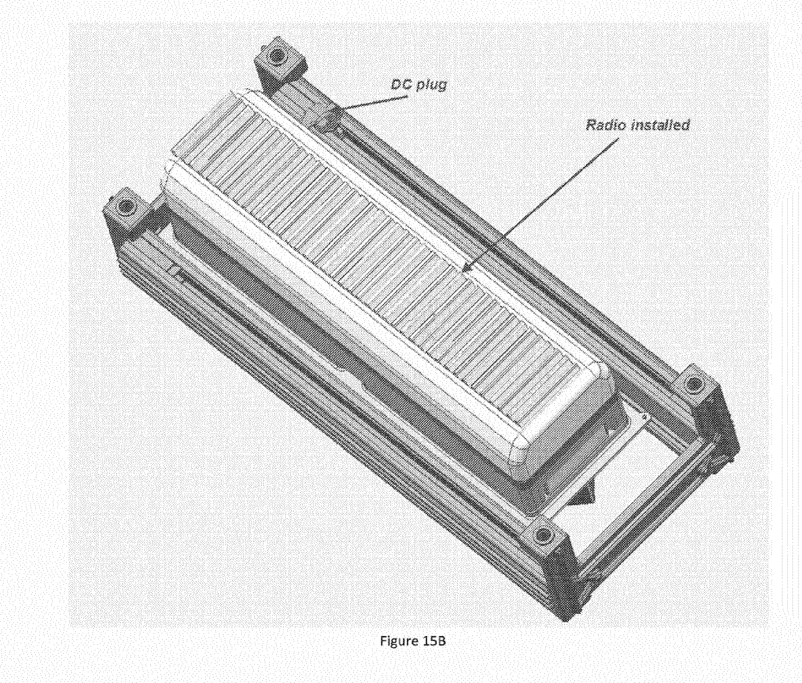

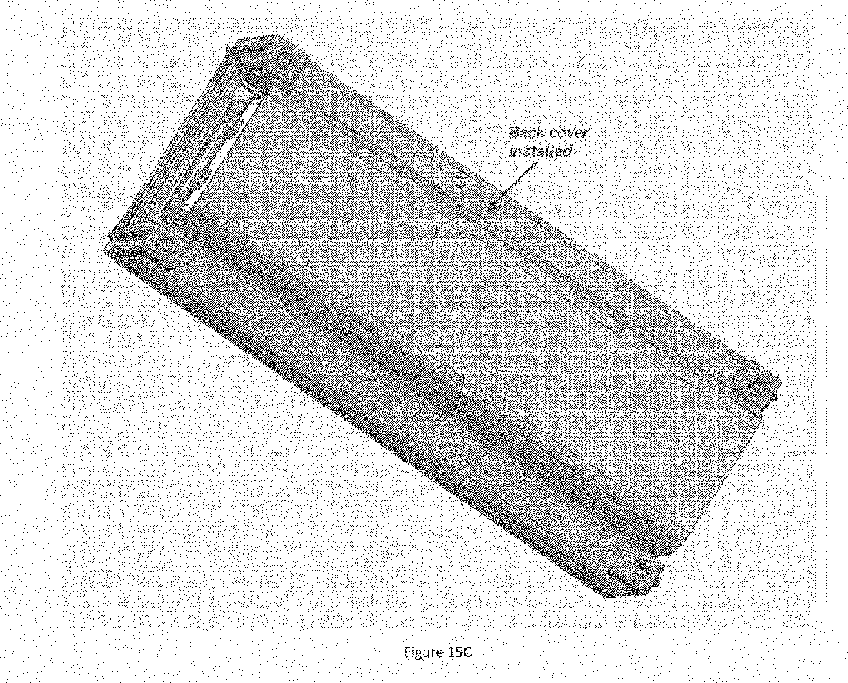

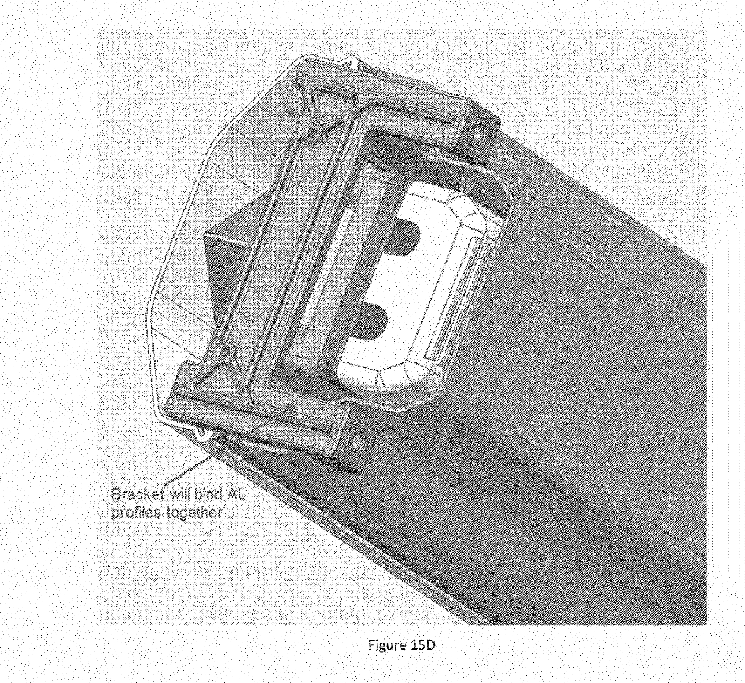

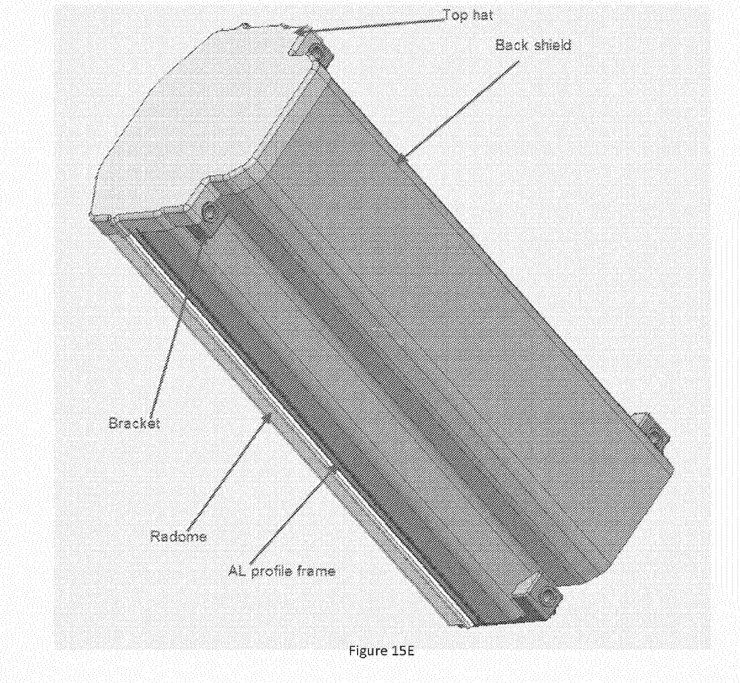

Figures 15A, 15B, 15C, 15D, and 15E illustrate various stages of manufacture of an assembly according to certain embodiments. As shown in Figure 15A, an aluminum profile with DC feeding can be provided. In certain embodiments, two aluminum profiles can be used for DC feeding: one for positive and one for ground. This profile can be interconnected with diecast brackets.

Also in one embodiment an RF feeding may be arranged along with DC feeding, or with its own feeding line in the same aluminum profile or in another aluminum profile. For clarity, only DC feeding in one aluminum profile is shown in the figures.

Figure 15B shows a radio installed on the profile, together with a DC plug. A back cover can be installed, as shown in Figure 15C. As shown in more detail in Figure 15D, the bracket that joins the profile can bracket the back cover as well.

Figure 15E shows the radome top hat and back shield installed. The aluminum (AL) profile frame and bracket can also be seen.

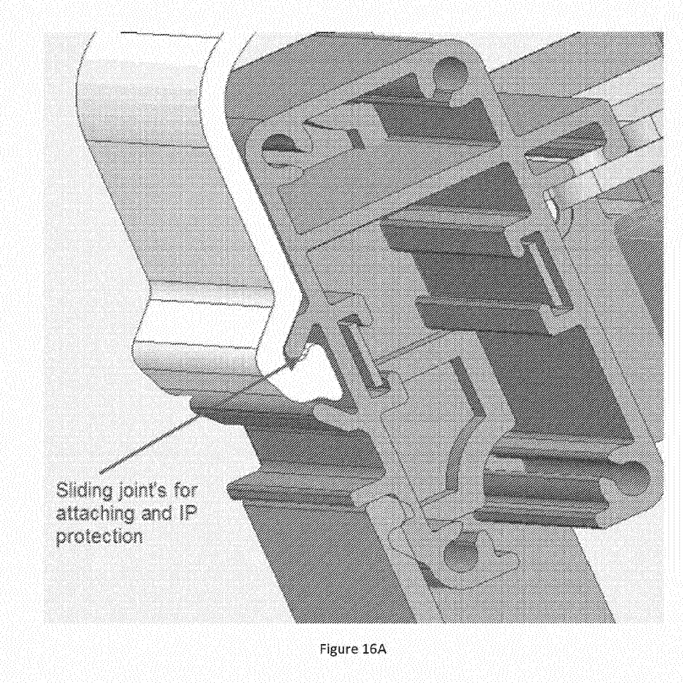

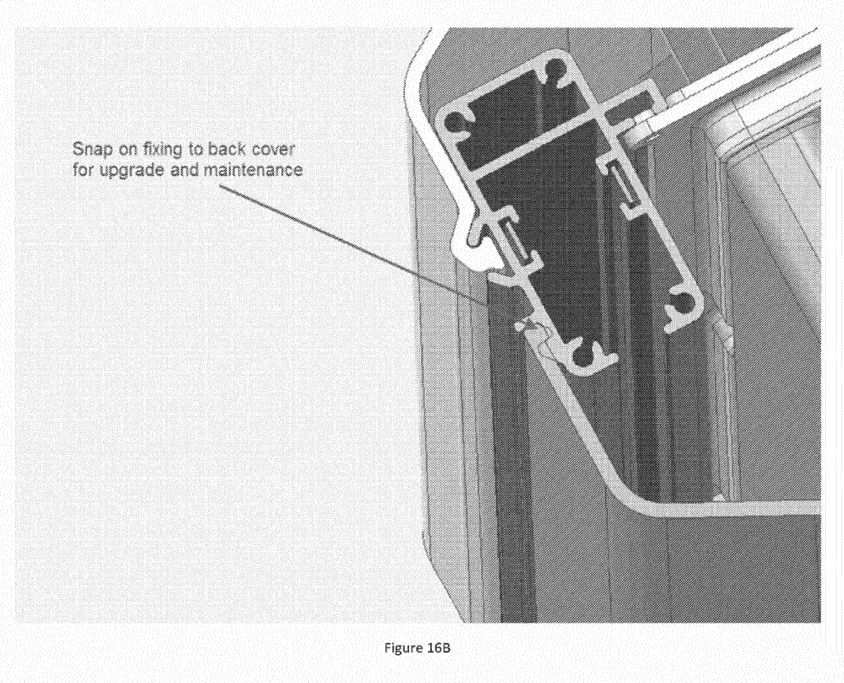

Figures 16A and 16B illustrate a joint mechanism according to certain embodiments. As shown in Figure 16A, a sliding joint can be provided for attaching and IP protection. Additionally, as shown in Figure 16B, there can be a snap on fixing to back cover for upgrade and maintenance.

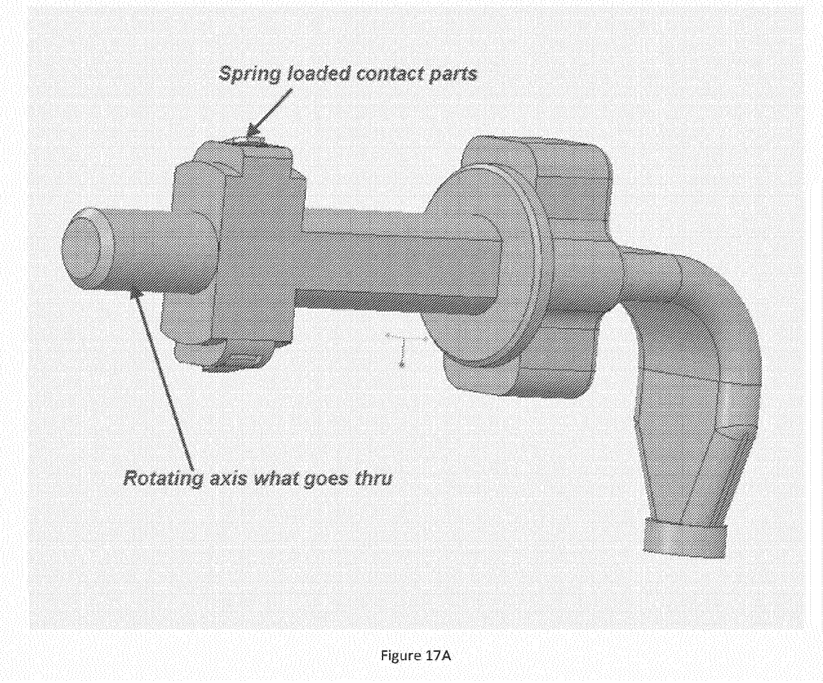

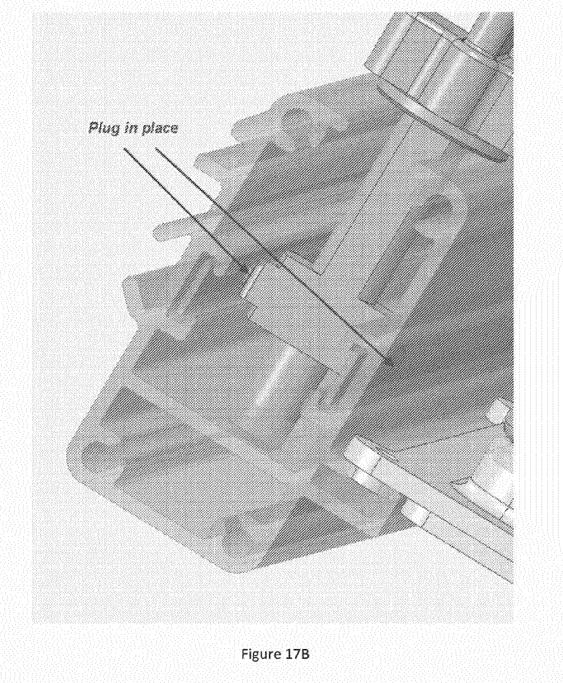

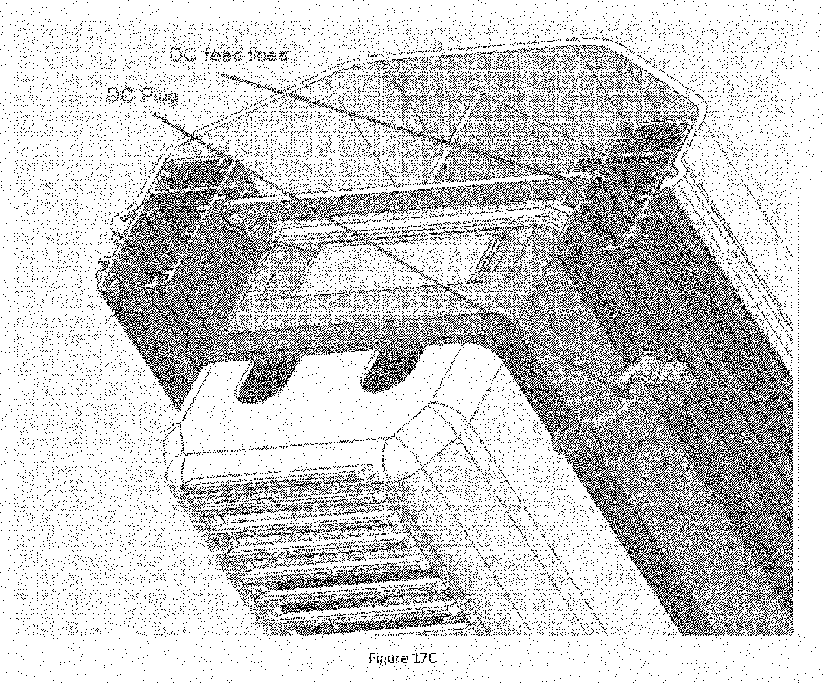

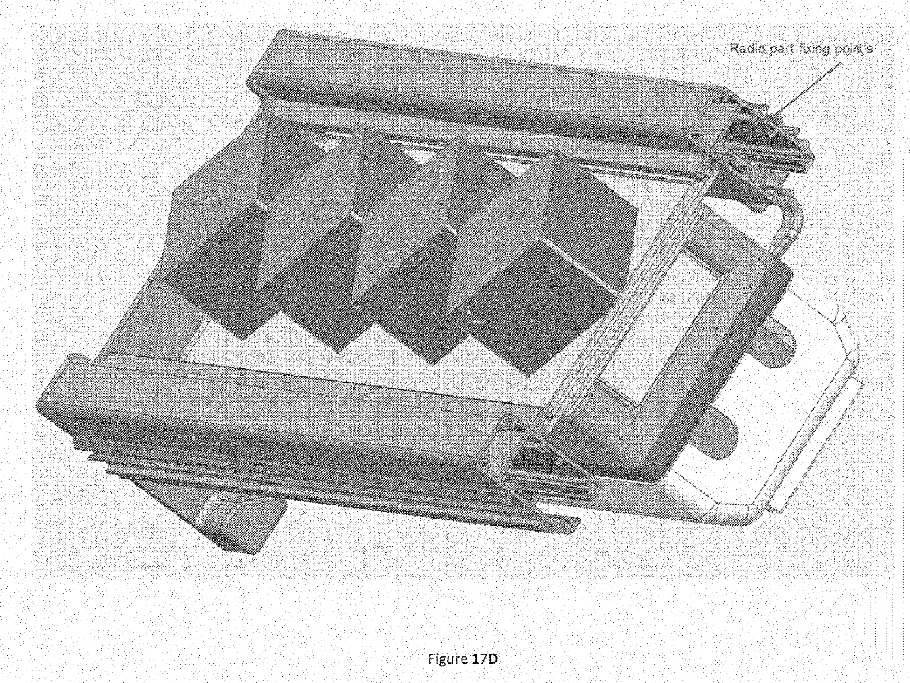

Figures 17A, 17B, 17C, and 17D illustrate a plug component according to certain embodiments. As shown in Figure 17A, a plug component can include a rotating axis that can be positioned through the aluminum profile described above. The plug component can also include spring loaded contact parts.

As shown in Figure 17B, when the plug is in place, the spring loaded contact parts can interface with the DC feed line in the aluminum profile. Figure 17C shows this interaction between the DC plug and the DC feed lines with even more clarity. Furthermore, Figure 17D illustrates the relative position of the DC plug to the radio part fixing points.

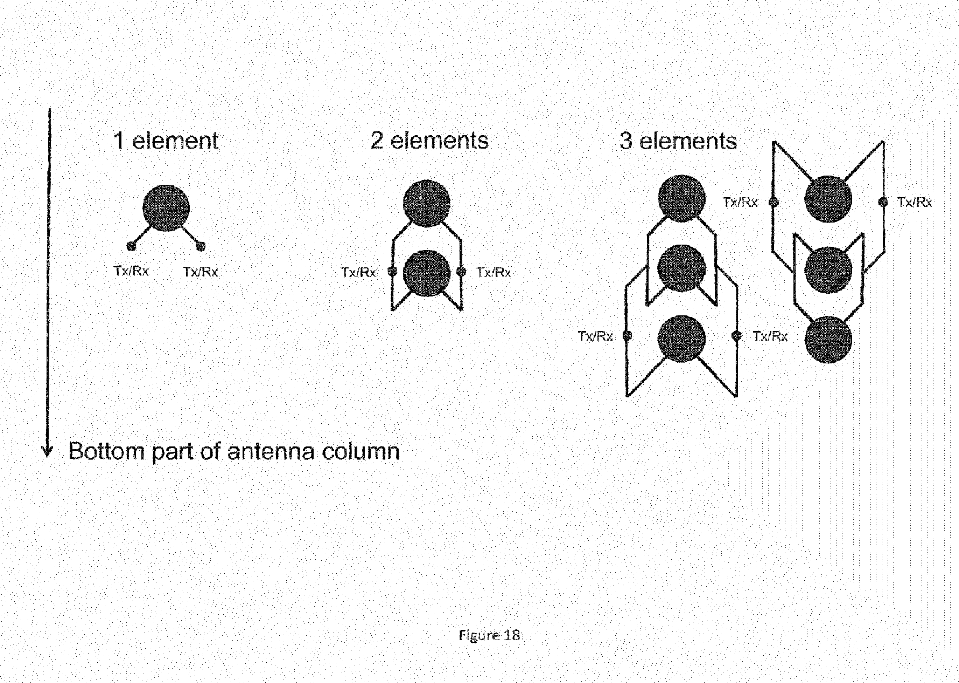

Figure 18 illustrates various arrangements of antenna radiator elements according to certain embodiments. As shown in Figure 18 on the left side, a single antenna radiator element can be provided with two transmission/reception (Tx/Rx) points for Tx/Rx ports. Alternatively, as shown in the center section, a pair of antenna radiator elements 10 can share two Tx/Rx points. In a further alternative, as shown on the right side, three antenna radiator elements 10 can share two Tx/Rx points.

In certain embodiments, a system can include a radio module and a plurality of antenna radiator elements. The plurality of antenna radiator elements can be integrated with the radio module. The system can be configured to provide a modular assembly. Thus, the system can be configured to be used alone (such as in a pico cell implementation) or in combination with similar modules (such as in a macro base station implementation).

The system can also include a plurality of transmission/reception (Tx/Rx) ports integrated with the radio module. There is no requirement that the number of Tx/Rx ports correspond to the number of antenna radiator elements.

In certain embodiments, there can be at least four transmission/reception ports. Furthermore, in certain embodiments there can be at least five antenna radiator elements.

Thus, there can be four ports (tx/rx) and five radiator elements in certain embodiments. Along with four ports, also another number can be used, such as two or three. In certain embodiments, a higher number of radiators can be used to provide higher gain with the same number of ports. Connection to this extra radiator can be done in the way with matching/combining circuit that all of radiators will have some power coming in. Further it is also possible to have more than one extra radiator, such as one to three extra radiators.

The system can also include a reflector provided between the plurality of antenna radiator elements and the radio module and integrated with the radio module. Furthermore, the system can include a combiner provided between the plurality of antenna radiator elements and the reflector (see, for example, Figure 1). The system can also include a combiner integrated into the radio module (see, for example, Figure 2). The system can further include a filter, a power amplifier, a low noise amplifier, a digital front end, and a transceiver, wherein the filter, power amplifier, low noise amplifier, digital front end, and transceiver are integrated into the radio module.

Furthermore, there can be antenna assembly that includes a plurality of the previously described radio modules. Thus, in certain embodiments, a system can include a plurality of radio modules. Each radio module of the plurality of radio modules can include a plurality of antenna radiator elements. The plurality of antenna radiator elements can be integrated with the respective radio module.

Each radio module can further include a plurality of transmission/reception ports integrated with the respective radio module. The number of antenna radiator elements can be greater than the number of transmission/reception ports - such as from one to three more antenna radiator elements than transmission/reception ports. For example, each radio module can include at least four transmission/reception ports. Also, or in addition, each radio module can include at least five antenna radiator elements.

The above-described systems and modules can be manufactured in various ways. In certain embodiments, the location is shown at the ends of antenna, which may make the assembly easier to build. However, certain embodiments are not limited to the end of antennas location. Further there can be multiple antenna radiator elements next to each other, so the vertical beamforming is possible. These can be arranged as straight plate, curved plate, half-circle, \_/-shaped plate, u-shaped plate, or even circle, among other possible configurations.

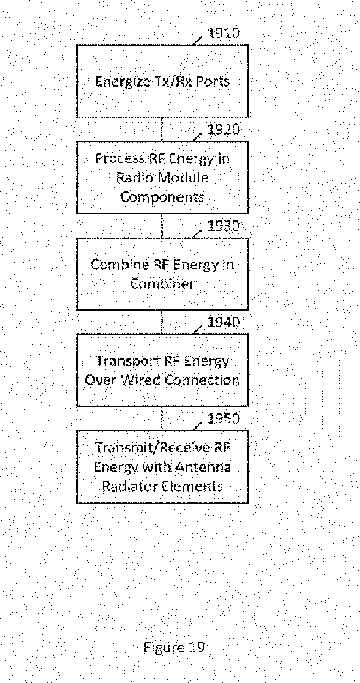

Figure 19 illustrates a method according to certain embodiments. As shown in Figure 19, at 1910 a method can include energizing at least one of transmission/reception ports integrated with a radio module. The method can also include, at 1950, transmitting or receiving radio frequency energy with a plurality of antenna radiator elements. The plurality of antenna radiator elements can be integrated with the radio module. The number of antenna radiator elements can be at least one more than the number of transmission/reception ports. The system can be configured to provide a modular assembly.

The number of antenna radiator elements can be from one to three more than the number of transmission/reception ports. For example, the radio module can include at least four transmission/reception ports and the radio module can include at least five antenna radiator elements.

The method can also include, at 1930, combining the radio frequency energy in a combiner provided between the plurality of antenna radiator elements and a reflector or in a combiner integrated into the radio module.

The method can further include, at 1920, processing the radio frequency energy in at least one of a filter; a power amplifier; a low noise amplifier; a digital front end; and a transceiver. The filter, power amplifier, low noise amplifier, digital front end, and transceiver can be integrated into the radio module.

The method can additionally include, at 1940, transporting the radio frequency energy over a wired connection between the plurality of antenna radiator elements and the radio module.

Certain embodiments may provide various benefits and/or advantages. For example, in certain embodiments efficiency of research and development may be improved. For example, there may be fewer variants and less customization needed for different radio access network operators. Furthermore, there may be better system RF performance as compared to conventionally customized systems. In certain embodiments, the antenna does not need a reflector made from an additional part, since the radio module mechanic may work as a reflector. Furthermore, the connection between radio module and antenna can be implemented without RF cables. Furthermore, there may be cost savings from radio module integration.

Certain embodiments described herein illustrate how an antenna column can be constructed from antennas integrated to a radio module. Two or more columns may be constructed as well from these integrated packages. Such multiple column embodiments may provide higher gain or aid in horizontal beamforming.

Although the above embodiments have been described by way of several examples, certain embodiments may be applicable to other systems. For example, although certain embodiments relate to base station or pico cell technology, similar embodiments can be implemented in other wireless devices, such as remote radio heads, relay stations, or the like. In certain embodiments, the system can be an antenna for a sensor system or user equipment. Thus, various modifications can be made to the above-described examples, based on the above description, examples, and combinations thereof and variations thereon.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention. In order to determine the metes and bounds of the invention, therefore, reference should be made to the appended claims.

## Claims

1. A system, comprising:
a radio module;
a plurality of antenna radiator elements, wherein the plurality of antenna radiator elements are integrated with the radio module; and
at least one of transmission/reception ports integrated with the radio module,
wherein the number of antenna radiator elements is at least one more than the number of transmission/reception ports, and
wherein the system is configured to provide a modular assembly.

2. The system of claim 1, wherein the number of antenna radiator elements is from one to three more than the number of transmission/reception ports.

3. The system of claim 1, comprising at least four transmission/reception ports.

4. The system of claim 1, comprising at least five antenna radiator elements.

5. The system of claim 1, further comprising:
a reflector provided between the plurality of antenna radiator elements and the radio module and integrated with the radio module.

6. The system of claim 5, further comprising:
a combiner integrated into the radio module.

7. The system of claim 1, further comprising:
a filter;
a power amplifier;
a low noise amplifier;
a digital front end; and
a transceiver,
wherein the filter, power amplifier, low noise amplifier, digital front end, and transceiver are integrated into the radio module.

8. The system of claim 1, further comprising:
at least one extension unit, wherein the extension unit is configured to extend from a main body of a radio module and support at least one of the plurality of antenna radiator elements.

9. The system of claim 1, further comprising:
at least one other radio modules,
each radio module of the at least one other radio module comprising
at least one antenna radiator element, wherein the at least one antenna radiator element is integrated with a respective other radio module; and
at least one of transmission/reception ports integrated with the respective another radio module, wherein the number of antenna radiator elements for each radio module is at least a same number as the number of transmission/reception ports.

10. A method, comprising:
energizing at least one of transmission/reception ports integrated with a radio module; and
transmitting or receiving radio frequency energy with a plurality of antenna radiator elements, wherein the plurality of antenna radiator elements are integrated with the radio module; and
wherein the number of antenna radiator elements is at least one more than the number of transmission/reception ports, and
wherein the system is configured to provide a modular assembly.

11. The method of claim 10, wherein the number of antenna radiator elements is from one to three more than the number of transmission/reception ports.

12. The method of claim 10, wherein the radio module comprises at least four transmission/reception ports.

13. The system of claim 10, wherein the radio module comprises at least five antenna radiator elements.

14. The method of claim 10, further comprising:
combining the radio frequency energy in a combiner provided between the plurality of antenna radiator elements and a reflector.

15. The method of claim 10, further comprising:
processing the radio frequency energy in at least one of a filter;
a power amplifier;
a low noise amplifier;
a digital front end; and
a transceiver,
wherein the filter, power amplifier, low noise amplifier, digital front end, and transceiver are integrated into the radio module.
